# EUROPEAN PATENT SPECIFICATION

(11) **EP 4 031 463 B1**
(45) Date of publication and mention of the grant of the patent: **22.04.2026**
(21) Application number: 20865298.2
(22) Date of filing: 17.09.2020
(51) Int. Cl.: B65D 47/08, B65D 47/36, B65D 77/20, B65D 85/72

(54) **INTEGRATED CLOSURE AND CONTAINER**
INTEGRIERTER VERSCHLUSS UND BEHÄLTER
FERMETURE INTÉGRÉE ET RÉCIPIENT

(30) Priority: 18.09.2019 US 201962902020 P
(43) Date of publication of application: 27.07.2022
(60) Divisional application: 26164344.9
(73) Proprietor: Jabil Inc., St. Petersburg, Florida 33716 (US)
(72) Inventor: DAVIDSON, Ryan P., St. Petersburg, Florida 33716 (US); MINNETTE, Jeffrey C., St. Petersburg, Florida 33716 (US)
(74) Representative: Gulde & Partner
(86) International application number: PCT/US2020/051235
(87) International publication number: WO 2021/055578

(56) References cited:
- WO-A1-2017/100829
- WO-A1-2017/100829
- JP-A- 2012 250 727
- JP-A- H07 291 370
- US-A- 5 090 584
- US-A1- 2001 050 264
- US-A1- 2012 012 586

## Description

### TECHNICAL FIELD

This disclosure relates to packaging and in particular, an integrated closure and container.

### BACKGROUND

Containers, such as bottles, use liners and foils to seal and contain a material in the container. These sealing methods have multiple problems. The materials used in the foils are expensive relative to the cost of the container and the closure since the foils generally correspond to the size of the mouth of the container. In addition, placement and attachment of the foil adds complications to manufacturing. Access to the material in the container requires removal of the foil. The removed foils are not environmentally friendly as they are an additional disposable.

Conventional closures for containers are disclosed in US 5 090 584 A , which describes a closure in accordance with the preamble of appended claim 1, and WO 2017/100829 A1.

### SUMMARY

Disclosed herein are integrated closures for a container. The integrated closure includes a base and a lid connected to the base via a hinge, where the lid and hinge are configured to permit the lid to open towards a center of the integrated closure, and a film. The film including a first portion connected to at least a portion of a bottom surface of the base, a second portion connected to at least a bottom surface of the lid, and a third portion connected to the first portion and releasably connected to the second portion. In an embodiment, the integrated closure includes a tamper indicator membrane connected to an edge of the lip and a corresponding edge of the base. In an embodiment, the base and lid further include a bead facing the container, the bead engaging a ledge on the container to maintain the lid in a closed position with respect to the container. In an embodiment, the base further includes a retention mechanism, the retention mechanism configured to engage and retain the lid in an open position.

### BRIEF DESCRIPTION OF THE DRAWINGS

The disclosure is best understood from the following detailed description when read in conjunction with the accompanying drawings and are incorporated into and thus constitute a part of this specification. It is emphasized that, according to common practice, the various features of the drawings are not to-scale. On the contrary, the dimensions of the various features are arbitrarily expanded or reduced for clarity.
FIG. 1 is a diagram of an integrated closure and container in a closed position in accordance with some implementations.
FIG. 2 is a top view of an integrated closure in accordance with some implementations.
FIG. 3A is a perspective diagram an integrated closure in accordance with some implementations.
FIG. 3B is an integrated closure in action accordance with some implementations.
FIG. 4 is a bottom view of an integrated closure in accordance with some implementations.
FIG. 5A is a bottom diagram of an integrated closure in accordance with some implementations.
FIG. 5B is a partial bottom diagram of an integrated closure in accordance with some implementations.
FIG. 6 is a view of an integrated closure and container in an open position in accordance with some implementations.
FIG. 7 is a cross-sectional view of an integrated closure and container in accordance with some implementations.
FIG. 8 is a cross-sectional view of an integrated closure and container in accordance with some implementations.
FIG. 9 is flowchart for manufacturing an integrated closure and container in accordance with some implementations.
FIG. 10 is flowchart for manufacturing an integrated closure and container in accordance with some implementations.

### DETAILED DESCRIPTION

The figures and descriptions provided herein may be simplified to illustrate aspects of the described embodiments that are relevant for a clear understanding of the herein disclosed processes, machines, manufactures, and/or compositions of matter, while eliminating for the purpose of clarity other aspects that may be found in typical similar devices, systems, compositions and methods. Those of ordinary skill may thus recognize that other elements and/or steps may be desirable or necessary to implement the devices, systems, compositions and methods described herein. However, because such elements and steps are well known in the art, and because they do not facilitate a better understanding of the disclosed embodiments, a discussion of such elements and steps may not be provided herein. However, the present disclosure is deemed to inherently include all such elements, variations, and modifications to the described aspects that would be known to those of ordinary skill in the pertinent art in light of the discussion herein.

Embodiments and implementations are provided throughout so that this disclosure is sufficiently thorough and fully conveys the scope of the disclosed embodiments to those who are skilled in the art. Numerous specific details are set forth, such as examples of specific aspects, devices, and methods, to provide a thorough understanding of embodiments of the present disclosure. Nevertheless, it will be apparent to those skilled in the art that certain specific disclosed details need not be employed, and that embodiments may be embodied in different forms. As such, the exemplary embodiments set forth should not be construed to limit the scope of the disclosure.

The terminology used herein is for the purpose of describing particular embodiments only and is not intended to be limiting. For example, as used herein, the singular forms "a", "an" and "the" may be intended to include the plural forms as well, unless the context clearly indicates otherwise. The terms "comprises," "comprising," "including," and "having," are inclusive and therefore specify the presence of stated features, steps, operations, elements, and/or components, but do not preclude the presence or addition of one or more other features, steps, operations, elements, components, and/or groups thereof.

The steps, processes, and operations described herein are thus not to be construed as necessarily requiring their respective performance in the particular order discussed or illustrated, unless specifically identified as a preferred or required order of performance. It is also to be understood that additional or alternative steps may be employed, in place of or in conjunction with the disclosed aspects.

Yet further, although the terms first, second, third, etc. may be used herein to describe various elements, steps or aspects, these elements, steps or aspects should not be limited by these terms. These terms may be only used to distinguish one element or aspect from another. Thus, terms such as "first," "second," and other numerical terms when used herein do not imply a sequence or order unless clearly indicated by the context. Thus, a first element, step, component, region, layer or section discussed below could be termed a second element, step, component, region, layer or section without departing from the teachings of the disclosure.

The non-limiting embodiments described herein are with respect to integrated closures and containers. The integrated closures and containers and methods for making the integrated closures and containers may be modified for a variety of applications and uses while remaining within the scope of the claims. The embodiments and variations described herein, and/or shown in the drawings, are presented by way of example only and are not limiting as to the scope. The descriptions herein may be applicable to all embodiments of the device and the methods for making the devices.

Disclosed herein are implementations of integrated closures and containers. The implementations shown are illustrative and other implementations may include grips or protrusions for aiding in opening the integrated closure which are within the scope of the specification and claims described herein.

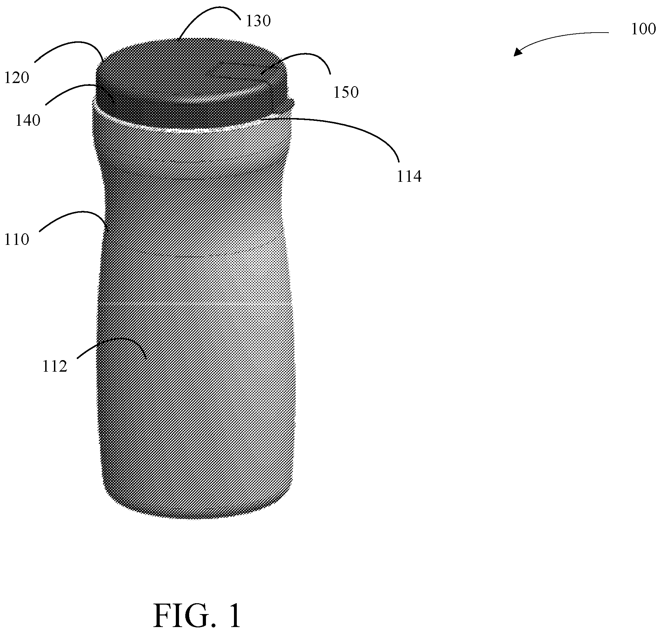

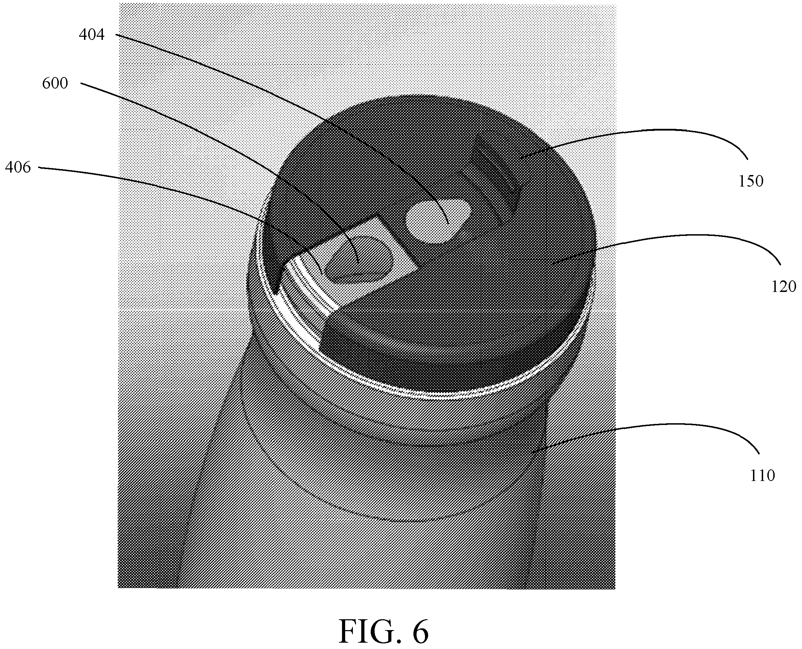

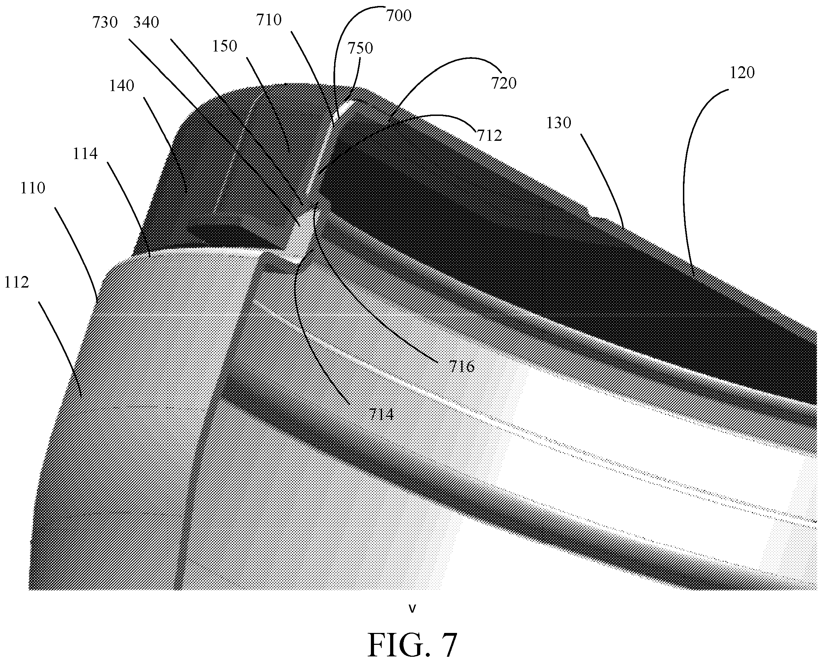

FIG. 1 is a view of an integrated closure and container 100 in a closed position in accordance with some implementations. The integrated closure and container 100 includes a container 110 and an integrated closure 120. The container 110 has a body 112 and a shoulder 114. The integrated closure 120 includes a base 130, a sidewall 140, and a lid 150. The height of the sidewall 140 is dimensioned to accommodate at least a neck (shown in FIG. 6 and FIG. 7) of the container 110. As described and shown in FIG. 6, FIG. 7, and FIG. 8, the width of the shoulder 114 of the container 110 is dimensioned to be bigger than the width of the integrated closure 120 as a tamper proof mechanism.

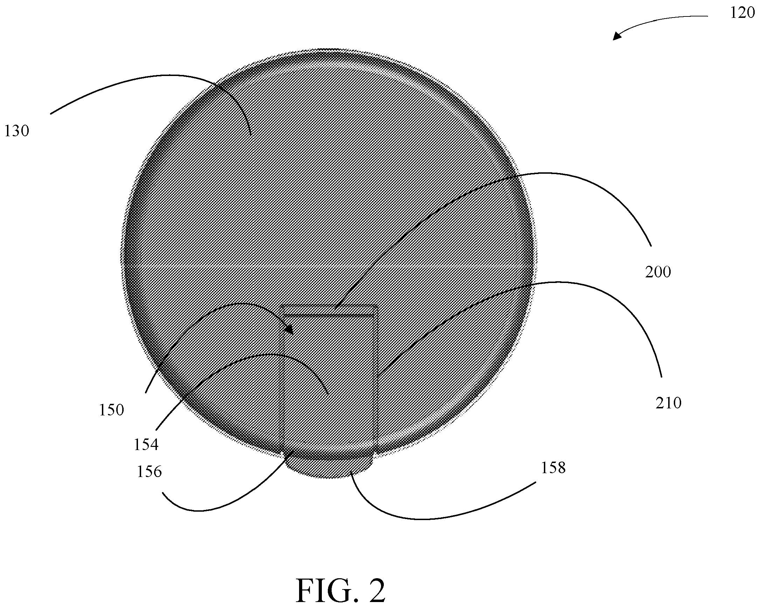

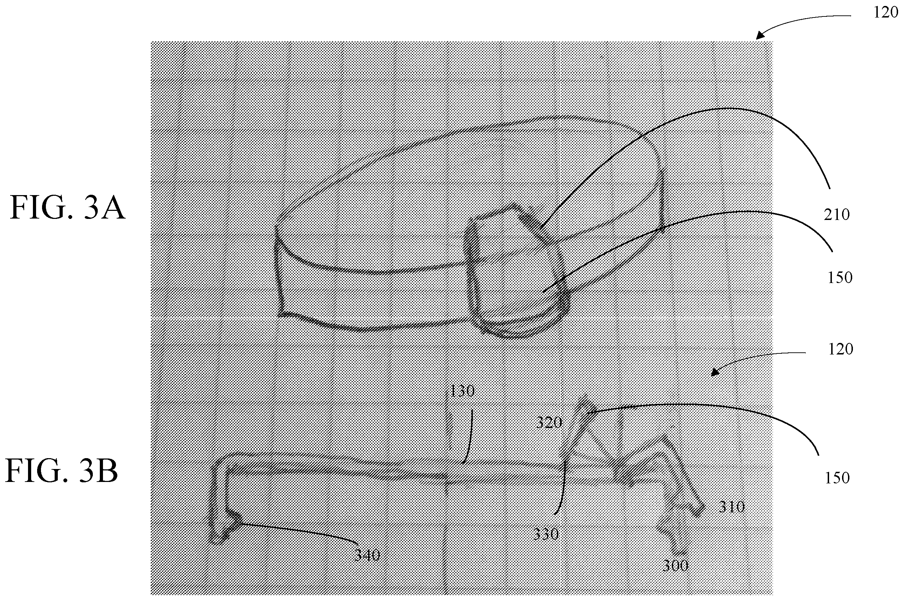

FIG. 2 is a top view and FIG. 3A is a perspective view of the integrated closure 120 of FIG. 1 in accordance with some implementations. The integrated closure 120 has a base 130, a lid 150, a hinge 200, and a tamper indication or evident membrane 210. The lid 150 includes a lid body 154 connected to a lid sidewall 156, which in turn is connected to a tab 158. The lid 150 is connected to the base 130 via the hinge 200 and the tamper indication membrane 210. The hinge 200 is a flexible membrane which allows the lid 150 move between an open position and a closed position as shown and described in FIG. 3B. The hinge 200 is located at an edge between the lid 150 and the base 130 such that the lid 150 opens toward a center of the integrated closure 120. The tamper indication membrane 210 is a molded membrane which provides evidence if the lid 150 has been previously open. The tamper indication membrane 210 is located at the edges between the lid 150 and the base 130 and the sidewall 140. The tamper indication membrane 210 is a membrane which tears when the tab 158 is pulled from a closed position to an open position as shown and described with respect to FIG. 3B. The base 130, the lid 150, the hinge 200, and the tamper indication membrane 210 may be made from a moldable material, where the tamper indication membrane 210 is made from moldable material which is thinner relative to the base 130, the lid 150, and the hinge 200. In an implementation, the moldable membrane may a plastic resin and the like.

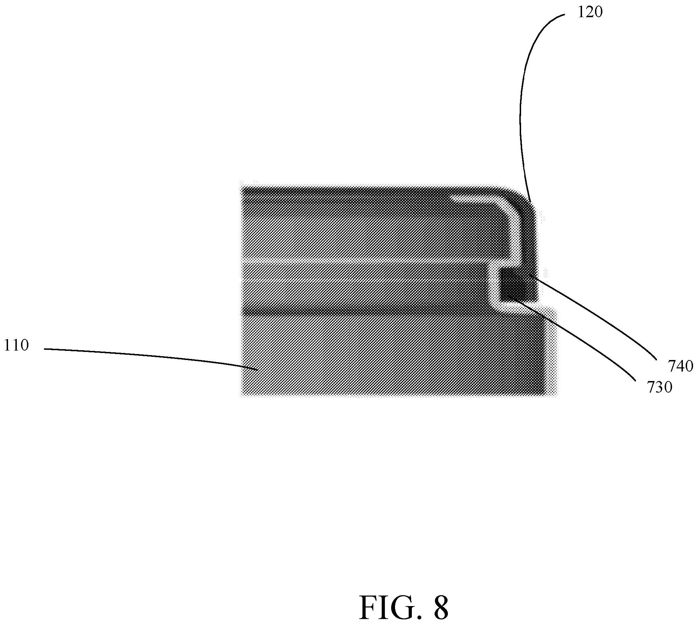

FIG. 3B shows the integrated closure 120 with the lid 150 in action accordance with some implementations. The hinge 200 of the lid 150 permits the lid 150 to be in a closed position 300, an intermediate position 310, and in an open position 320. In an implementation, the integrated closure 120 includes a retention mechanism 330 in the base 130 of the integrated closure 120 which maintains the lid 150 in the open position 320. The retention mechanism 330 may be an indentation or divot dimensioned to retain the tab 158 in the open position 320. In an implementation, the retention mechanism 330 may be a pressure or force fit mechanism. The integrated closure 120 includes a bead 340 on the lid sidewall 156 which runs along the circumference integrated closure 120. As shown and described with respect to FIG. 7 and FIG. 8, the bead 340 maintains the integrated closure 120 connected to the container 110 but permits the lid 150 to be opened and closed.

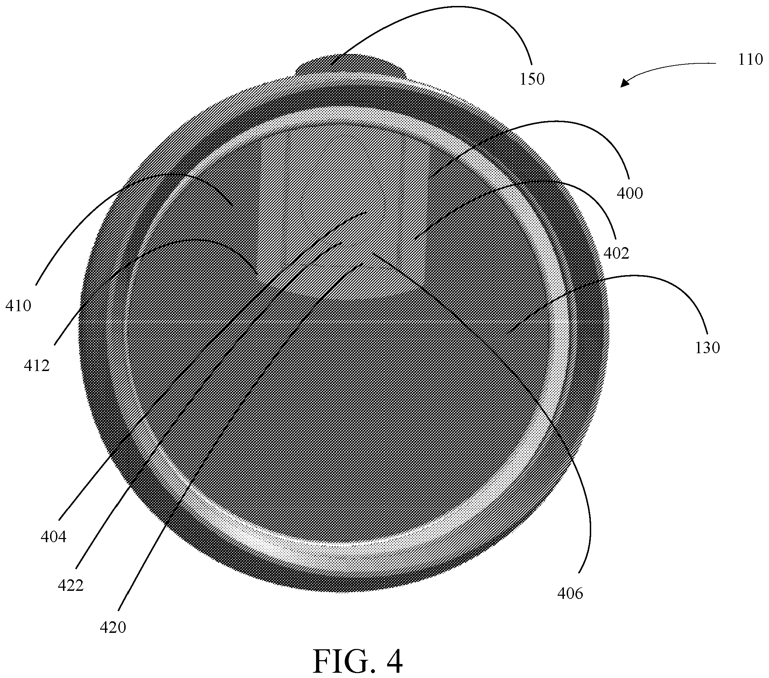

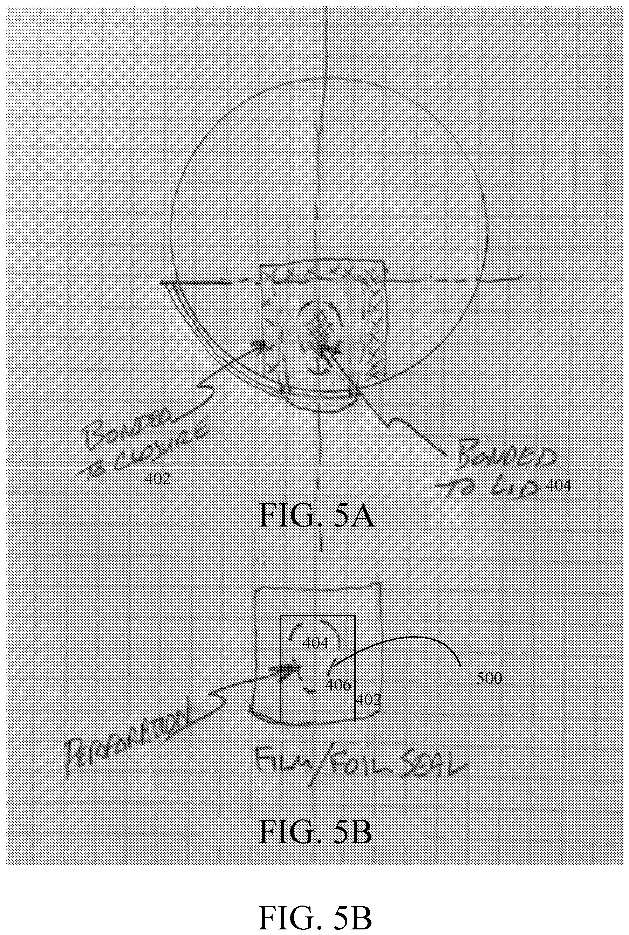

FIG. 4 is a bottom view of the integrated closure 120 of FIG. 1 in accordance with some implementations. FIG. 5A is a bottom diagram of the integrated closure 120 of FIG. 1 in accordance with some implementations. FIG. 5B is a partial bottom diagram of the integrated closure 120 of FIG. 1 in accordance with some implementations. A film or the like (collectively "film") 400 is integrated on the bottom surfaces of the base 130 and the lid 150. In an implementation, the film 400 is a multilayer film. In an implementation, the film 400 is a bondable multilayer film. In an implementation, the film 400 is a heat and pressure treatable, bondable multilayer film. In an implementation, the film 400 is a multilayer plastic which is moldable and bondable to the base 130 and lid 150 as described herein.

A first portion 402 of the film 400 is bonded to a corresponding portion 412 of a bottom surface 410 of the base 130 of the integrated closure 120. A second portion 404 of the film 400 is bonded to a corresponding portion 422 of a bottom surface 420 of the lid 150 of the integrated closure 110. The second portion 404 of the film 400 is in a perforated connection or relationship with a third portion 406 of the film 400 via a perforation line 500. As shown in FIG. 7, the film 400 is extended and molded or welded at an inner radius of the integrated closure 120. For example, the film 400 may extend to a curved section 750 or approximate thereof so that a portion of the film 400 may be in a sandwich position between the container 110 and the lid 150, and between the container 110 and the base 130 when the integrated closure is on the container. For example, the film 400 may extend to a portion of the sidewall 140. This may maintain the third portion 406 in a stretched and stiff position when the lid 150 is opened and the second portion 404 is separated from the third portion 406. In an implementation, although a perforation line 500 is described, other mechanisms may be used including a scribe line and the like.

FIG. 6 is a view of the integrated closure 120 on the container 110 in an open position in accordance with some implementations. As shown, when the lid 150 is flipped open from the container 110, the second portion 404 of the film 400 remains bonded to the lid 150 creating an opening or hole 600 relative to the third portion 406 for dispensing material contained in the container 110. The first portion 402 remains bonded on the bottom surface 410 of the base 130, and the third portion 406 is suspended due to its connection to the first portion 402. Since the second portion 404 remains on the lid 150, waste is mitigated.

FIG. 7 is a cross-sectional view of the integrated closure and container 100 in accordance with some implementations and FIG. 8 is a cross-sectional view of an integrated closure and container 100 in accordance with some implementations. As described herein, the container 110 has a body 112, a shoulder 114, and a neck 700. The neck 700 includes a sidewall 710 and a top shoulder 720. The sidewall 710 has a first leg 712 which is offset from a second leg 714 by a length of a third leg 716, which is perpendicular to the first leg 712 and the second leg 714 and connects the first leg 712 and the second leg 714. The third leg 716 being a ledge. The offset configuration forms a groove 730. The neck 700 has a "S" shaped configuration.

The integrated closure 120 has a base 130, a sidewall 140, and a lid 150. The sidewall 140 and the lid 150 have a bead protrusion 340 which engages the third leg 716 and permits the sidewall 140 and the lid 150 to fit in the groove 730. The engagement results in an audible and tactile indicator to a consumer or user that the lid 150 is snapped close with respect to the container 100.

The shoulder 114 of the container 110 is wider than the width of the integrated closure 120. This allows the integrated closure 120 to sit tightly on the shoulder 114. Consequently, the integrated closure 120 is tamper proof in that the integrated closure 120 is hard to remove from the container 110.

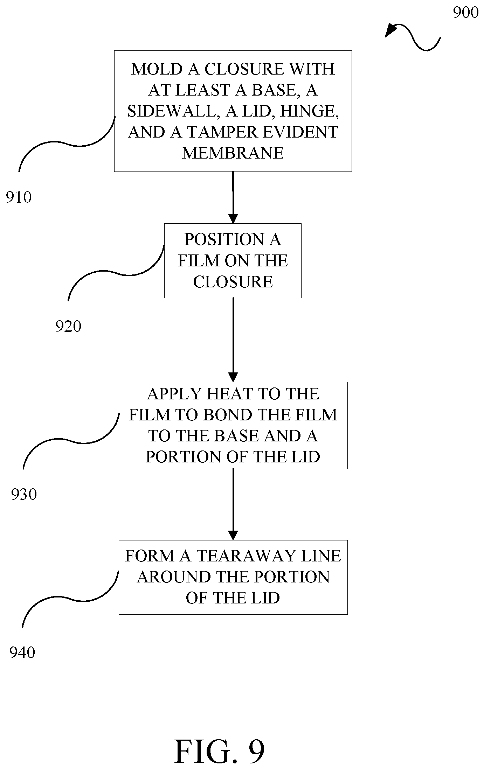

FIG. 9 is flowchart of a method 900 for manufacturing an integrated closure and container in accordance with some implementations. The method 900 includes molding 910 a closure at least a base, a sidewall, a lid, hinge, and a tamper evident membrane; positioning 920 a film on the closure; applying 930 heat to the film to bond the film to the base and a portion of the lid; and forming 940 a tearaway line around the portion of the lid. The method 900 may be used to make the integrated closure and containers in FIGs. 1-8, for example.

The method 900 includes molding 910 a closure including at least a base, a sidewall, a lid, hinge, and a tamper evident membrane. The integrated closure may be molded in a closed position. The tamper evident membrane may have a thinner thickness relative to the lid and/or the base, for example. The tamper evident membrane is situated between the edges of the base and the sidewall proximate to the edges of the lid such that the lid opens towards a center of the closure. The hinge is a flexible structure between an edge the base and the lid which is flexible, movable, or rotatable between the closed position and an open position and such that the lid opens towards a center of the closure. The integrated closure and container described herein may be manufactured using compression molding, injection molding and other like production processes. The integrated closure and container may be made from polypropylene, high-density polyethylene, polyethylene terephthalate (PET), moldable plastic, and the like.

The method 900 includes positioning 920 a film on the closure. The film is positioned on edge portions of the base proximate the lid and the lid. The film extends toward and around an inner radius of the closure or on a portion of the sidewall.

The method 900 includes applying 930 heat to the film to bond the film to the base and to a portion of the lid. A heat pad or the like may heat the film to bond the film to the base and to the portion of the lid. In an implementation, heat and pressure may be used. In an implementation, the portion has a defined shape.

The method 900 includes forming 940 a tearaway line around the portion of the lid to complete formation of an integrated closure. The film is perforated or scribed along the portion so that when the lid is opened, the perforated portion remains on the lid and an opening for dispensing material in the container is formed.

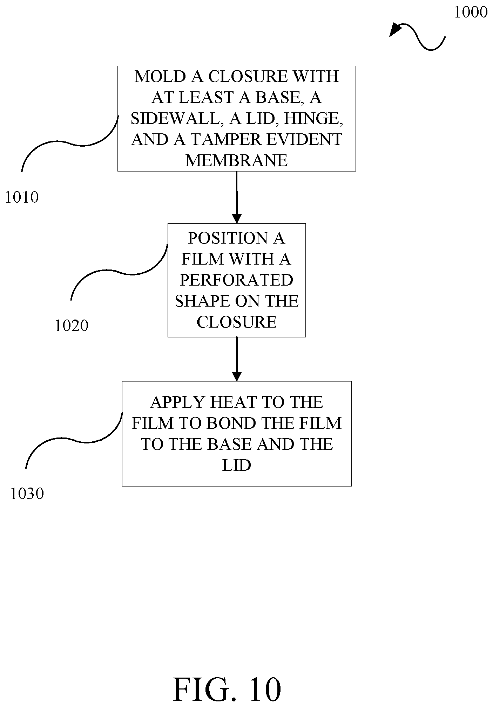

FIG. 10 is flowchart of a method 1000 for manufacturing an integrated closure and container in accordance with some implementations. The method 1000 includes molding 1010 a closure at least a base, a sidewall, a lid, hinge, and a tamper evident membrane; positioning 1020 a film with a perforated shape on the closure; and applying 1030 heat to the film to bond the film to the base and the lid. The method 1000 may be used to make the integrated closure and containers in FIGs. 1-8, for example.

The method 1000 includes molding 1010 a closure including at least a base, a sidewall, a lid, hinge, and a tamper evident membrane. The integrated closure may be molded in a closed position. The tamper evident membrane may have a thinner thickness relative to the lid and/or the base, for example. The tamper evident membrane is situated between the edges of the base and the sidewall proximate to the edges of the lid such that the lid opens towards a center of the closure. The hinge is a flexible structure between an edge the base and the lid which is flexible, movable, or rotatable between the closed position and an open position and such that the lid opens towards a center of the closure. The integrated closure and container described herein may be manufactured using compression molding, injection molding and other like production processes. The integrated closure and container may be made from polypropylene, high-density polyethylene, polyethylene terephthalate (PET), moldable plastic, and the like.

The method 1000 includes positioning 1020 a film with a perforated shape on the closure. The film is positioned on edge portions of the base proximate the lid and the perforated shape is positioned on the lid. The film extends toward and around an inner radius of the closure or on a portion of the sidewall.

The method 1000 includes applying 1030 heat to the film to bond the film to the base and to the lid. A heat pad or the like may heat the film to bond the film to the base and to the lid. In an implementation, heat and pressure may be used. The film is bonded so that when the lid is opened, the perforated shape remains on the lid and an opening for dispensing material in the container is formed.

The construction and arrangement of the methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials and components, colors, orientations, etc.). For example, the position of elements may be reversed or otherwise varied and the nature or number of discrete elements or positions may be altered or varied. Accordingly, all such modifications are intended to be included within the scope of the present disclosure, as long as they do not depart from the scope of the appended claims. The order or sequence of any process or method steps may be varied or re-sequenced according to alternative embodiments. Other substitutions, modifications, changes, and omissions may be made in the design, operating conditions and arrangement of the exemplary embodiments without departing from the scope of the appended claims.

Although the figures may show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure, as long as they do not depart from the scope of the appended claims. Likewise, software implementations could be accomplished with standard programming techniques with rule-based logic and other logic to accomplish the various connection steps, processing steps, comparison steps, and decision steps.

While the invention has been described in connection with certain embodiments, it is to be understood that the invention is not to be limited to the disclosed embodiments but, on the contrary, is intended to cover various modifications and equivalent arrangements included within the scope of the appended claims.

## Claims

1. An integrated closure (120) for a container (110), the integrated closure (120) comprising:
a base (130);
a lid (150) connected to the base (130) via a hinge (200), wherein the lid (150) and hinge (200) are configured to permit the lid (150) to open towards a center of the integrated closure (120); **characterised in that** it comprises:
a film (400), the film (400) comprising:
a first portion (402) connected to a portion (412) of a bottom surface (410) of the base (130), wherein the portion (412) of the bottom surface (410) is less than an entirety of the bottom surface (410);
a second portion (404) connected to at least a bottom surface (410) of the lid (150); and
a third portion (406) connected to the first portion (402) and releasably connected to the second portion (404).

2. The integrated closure (120) of claim 1, further comprising:
a tamper indicator membrane (210) connected to an edge of the lid (150) and a corresponding edge of the base (130).

3. The integrated closure (120) of claim 2, the base (130) and the lid (150) further comprising:
a bead (340) facing the container (110), the bead (340) engaging a ledge on the container (110) to maintain the lid (150) in a closed position with respect to the container (110).

4. The integrated closure (120) of claim 3, the base (130) further comprising:
a retention mechanism (330), the retention mechanism (330) configured to engage and retain the lid (150) in an open position (320).

5. The integrated closure (120) of claim 4, wherein the film (400) extends to a portion of a sidewall (140) of the base (130) and the lid (150).

6. A method for manufacturing the integrated closure (120) of claim 5, comprising:
molding the base (130), the lid (150), and the hinge (200) to form a pre-integrated closure (120);
positioning a film (400) on the pre-integrated closure (120);
applying heat to bond the film (400) to the base (130) and a portion of the lid (150); and
forming a tearaway line around the portion of lid (150) to form the first portion (402), the second portion (404), and the third portion (406);
or
molding the base (130), the lid (150), and the hinge (200) to form a pre-integrated closure (120);
positioning a film (400) with a perforated shape on the pre-integrated closure (120); and
applying heat to bond the film (400) to the base (130) and a portion of the lid (150).

7. The method of claim 6, wherein the molding includes molding the tamper indication membrane (210) as part of the pre-integrated closure (120).

8. The method of claim 7, wherein the molding includes molding the bead (340) as part of the pre-integrated closure (120).

9. The method of claim 8, wherein the molding includes molding the retention mechanism (330) as part of the pre-integrated closure (120).

## Patentansprüche

1. Integrierter Verschluss (120) für einen Behälter (110), wobei der integrierte Verschluss (120) Folgendes umfasst:
eine Basis (130);
einen Deckel (150), der über ein Scharnier (200) mit der Basis (130) verbunden ist, wobei der Deckel (150) und das Scharnier (200) so konfiguriert sind, dass sich der Deckel (150) zur Mitte des integrierten Verschlusses (120) hin öffnen lässt; **dadurch gekennzeichnet, dass** er Folgendes umfasst:
einen Film (400), wobei der Film (400) Folgendes umfasst:
einen ersten Abschnitt (402), der mit einem Abschnitt (412) einer Bodenfläche (410) der Basis (130) verbunden ist, wobei der Abschnitt (412) der Bodenfläche (410) kleiner ist als die gesamte Bodenfläche (410);
einen zweiten Abschnitt (404), der mit mindestens einer Bodenfläche (410) des Deckels (150) verbunden ist; und
einen dritten Abschnitt (406), der mit dem ersten Abschnitt (402) verbunden und lösbar mit dem zweiten Abschnitt (404) verbunden ist.

2. Integrierter Verschluss (120) nach Anspruch 1, umfassend ferner:
eine Manipulationsanzeigemembran (210), die mit einer Kante des Deckels (150) und einer entsprechenden Kante der Basis (130) verbunden ist.

3. Integrierter Verschluss (120) nach Anspruch 2, wobei die Basis (130) und der Deckel (150) ferner Folgendes umfassen:
eine dem Behälter (110) zugewandte Wulst (340), wobei die Wulst (340) in eine Leiste am Behälter (110) eingreift, um den Deckel (150) in einer geschlossenen Position in Bezug auf den Behälter (110) zu halten.

4. Integrierter Verschluss (120) nach Anspruch 3, wobei die Basis (130) ferner Folgendes umfasst:
einen Haltemechanismus (330), wobei der Haltemechanismus (330) dazu konfiguriert ist, in den Deckel (150) einzugreifen und diesen in einer offenen Position (320) zu halten.

5. Integrierter Verschluss (120) nach Anspruch 4, wobei sich der Film (400) bis zu einem Abschnitt einer Seitenwand (140) der Basis (130) und des Deckels (150) erstreckt.

6. Verfahren zur Herstellung des integrierten Verschlusses (120) nach Anspruch 5, umfassend:
Formen der Basis (130), des Deckels (150) und des Scharniers (200), um einen vorintegrierten Verschluss (120) zu bilden;
Positionieren eines Films (400) auf dem vorintegrierten Verschluss (120);
Aufbringen von Wärme, um den Film (400) mit der Basis (130) und einem Abschnitt des Deckels (150) zu verbinden; und
Ausbilden einer Aufreißlinie um den Abschnitt des Deckels (150) herum, um den ersten Abschnitt (402), den zweiten Abschnitt (404) und den dritten Abschnitt (406) zu bilden;
oder
Formen der Basis (130), des Deckels (150) und des Scharniers (200), um einen vorintegrierten Verschluss (120) zu bilden;
Positionieren eines Films (400) mit einer perforierten Form auf dem vorintegrierten Verschluss (120); und
Aufbringen von Wärme, um den Film (400) mit der Basis (130) und einem Abschnitt des Deckels (150) zu verbinden.

7. Verfahren nach Anspruch 6, wobei das Formen das Formen der Manipulationsanzeigemembran (210) als Teil des vorintegrierten Verschlusses (120) umfasst.

8. Verfahren nach Anspruch 7, wobei das Formen das Formen der Wulst (340) als Teil des vorintegrierten Verschlusses (120) umfasst.

9. Verfahren nach Anspruch 8, wobei das Formen das Formen des Haltemechanismus (330) als Teil des vorintegrierten Verschlusses (120) umfasst.

## Revendications

1. Fermeture intégrée (120) pour récipient (110), fermeture intégrée (120) comprenant :
une base (130) ;
un couvercle (150) relié à la base (130) via une charnière (200), dans lequel le couvercle (150) et la charnière (200) sont configurés pour permettre au couvercle (150) de s'ouvrir vers un centre de la fermeture intégrée (120) ; **caractérisé en ce qu'**elle comprend :
un film (400), film (400) comprenant :
une première portion (402) reliée à portion (412) d'une surface inférieure (410) de la base (130), dans laquelle la portion (412) de la surface inférieure (410) est inférieure à l'intégralité de la surface inférieure (410) ;
une deuxième portion (404) reliée au moins à surface inférieure (410) du couvercle (150) ; et
une troisième portion (406) reliée à la première portion (402) et reliée de manière amovible à la deuxième portion (404).

2. Fermeture intégrée (120) selon la revendication 1, comprenant en outre :
une membrane indicatrice d'effraction (210) reliée à bord du couvercle (150) et à bord correspondant de la base (130).

3. Fermeture intégrée (120) selon la revendication 2, la base (130) et le couvercle (150) comprenant en outre :
un bourrelet (340) faisant face au récipient (110), le bourrelet (340) s'engageant avec un rebord sur le récipient (110) afin de maintenir le couvercle (150) en position fermée par rapport au récipient (110).

4. Fermeture intégrée (120) selon la revendication 3, la base (130) comprenant en outre :
un mécanisme de retenue (330), le mécanisme de retenue (330) étant configuré pour engager et retenir le couvercle (150) dans une position ouverte (320).

5. Fermeture intégrée (120) selon la revendication 4, dans laquelle le film (400) s'étend jusqu'à une portion d'une paroi latérale (140) de la base (130) et du couvercle (150).

6. Procédé de fabrication de la fermeture intégrée (120) selon la revendication 5, consistant à :
mouler la base (130), le couvercle (150) et la charnière (200) afin de former une pré-fermeture intégrée (120) ;
positionner un film (400) sur la pré-fermeture intégrée (120) ;
appliquer de la chaleur afin de lier le film (400) à la base (130) et à une portion du couvercle (150) ; et
former une ligne d'arrachement autour de la portion du couvercle (150) afin de former la première portion (402), la deuxième portion (404) et la troisième portion (406) ;
ou
mouler la base (130), le couvercle (150) et la charnière (200) afin de former une pré-fermeture intégrée (120) ;
positionner un film (400) présentant une forme perforée sur la pré-fermeture intégrée (120) ; et
appliquer de la chaleur afin de lier le film (400) à la base (130) et à une portion du couvercle (150).

7. Procédé selon la revendication 6, dans lequel le moulage comporte le moulage de la membrane indicatrice d'effraction (210) comme partie de la pré-fermeture intégrée (120).

8. Procédé selon la revendication 7, dans lequel le moulage comporte le moulage du bourrelet (340) comme partie de la pré-fermeture intégrée (120).

9. Procédé selon la revendication 8, dans lequel le moulage comporte le moulage du mécanisme de retenue (330) comme partie de la pré-fermeture intégrée (120).
